# EUROPÄISCHE PATENTSCHRIFT

(11) **EP 1 371 865 B1**
(45) Veröffentlichungstag und Bekanntmachung des Hinweises auf die Patenterteilung: **02.08.2006**
(21) Anmeldenummer: 03011981.2
(22) Anmeldetag: 28.05.2003
(51) Int. Cl.: F16D 3/68, F16D 3/70

(54) **Elastische Kupplung**
Elastic coupling
Accouplement élastique

(30) Priorität: 11.06.2002 DE 10225948
(43) Veröffentlichungstag der Anmeldung: 17.12.2003
(73) Patentinhaber: A. FRIEDR. FLENDER AG, 46395 Bocholt (DE)
(72) Erfinder: Gödde, Peter, Dr., 46286 Dorsten (DE); Te Uhle, Michael, 46414 Rhede (DE); Fellinger, Josef, 4872 Neukirchen (AT)
(74) Vertreter: Radünz, Ingo

(56) Entgegenhaltungen:
- DE-A- 2 813 880
- DE-A- 2 903 636
- DE-B- 1 095 595
- DE-C- 636 924
- US-A- 2 074 939
- US-A- 3 195 324

## Beschreibung

Die Erfindung betrifft eine elastische Kupplung mit den Merkmalen des Oberbegriffes des Anspruches 1.

Derartige steckbare elastische Kupplungen sind in der Industrie weit verbreitet und werden in verschiedenen Anwendungen, wie z. B. Pumpenantrieben eingesetzt. Diese Kupplungen übertragen das Drehmoment der zu kuppelnden Maschinen bei gleichzeitig wirkendem Wellenversatz. Bei einigen Anwendungen werden bevorzugt elastische Kupplungen ohne Durchschlagsicherung ("durchschlagende Bauart") eingesetzt, die dadurch gekennzeichnet sind, dass bei Überlast oder Verschleiß bzw. Zerstörung der Elastomerelemente ein berührungsloses Freidrehen der Kupplungsteile zueinander gewährleistet ist.

Elastische Kupplungen mit Elastomerelementen, z. B. gemäß der DE 39 10 502 C2 übertragen das Drehmoment durch eine Umfangskraft, die die Elastomerelemente primär auf Biegung und Druck belastet. Um bei einer vorgegebenen Baugröße ein möglichst hohes Drehmoment zu übertragen, ist das Elastomerelement möglichst hart zu gestalten. Andererseits führt der Wellenversatz der gekoppelten Maschinen zu einer Verformung des Elastomerelements. Ebenso verlangt die Forderung nach einer geringen Rückstellkraft und damit nach geringen zusätzlichen Lagerkräften der gekuppelten Maschinen nach möglichst weichen Elastomerelementen. Zudem bestimmt die Härte des Elastomerelements wesentlich die Drehfedersteifigkeit der Kupplung. Auch hier besteht oft die Forderung nach einer drehweichen Ausführung mit entsprechend hoher Dämpfung.

Zurzeit werden Elastomerelemente für elastische Kupplungen mit weitgehend homogenen Eigenschaften eingesetzt, bei denen die oben beschriebenen gegensätzlichen Forderungen oft nicht genügend abgedeckt werden können. Entweder wird das Elastomerelement relativ hart ausgeführt, mit dem Nachteil eines nur geringen zulässigen Wellenversatzes, oder das übertragbare Drehmoment einer vorgegebenen Baugröße muss bei Verwendung von relativ weichen Elastomerelementen eingeschränkt werden.

Aus US-A-3 195 324 ist eine elastische Kupplung mit zwei Kupplungshälften bekannt, die beide mit Stegen versehen sind, wobei diese Stege ineinandergreifen. In den Zwischenräumen zwischen den Stegen befinden sich lose eingelegte Elastomerelemente. Jedes Elastomerelement besteht aus zwei harten Komponenten, die mit den Stegen der Kupplungshälften in Kontakt kommen und aus einer weichen Komponente, die zwischen den harten Komponenten liegt. Alle Komponenten des Elastomerelementes übertragen die Umfangskraft und werden ausschließlich auf Druck belastet.

Aus der DE 636 924 C ist eine elastische Kreuzgelenkkupplung bekannt, bei der die Klauen zweier Gabelköpfe in ein ringförmiges Gehäuse eindringen. Zwischen den Klauen der beiden Gabelköpfe ist jeweils ein Elastomerelement vorgesehen. Jedes Elastomerelement besteht aus zwei Gummistücken, zwischen denen ein drittes Gummistück vorgesehen ist. Das dritte Gummistück, das aus einem weicheren Werkstoff besteht als die beiden anderen Gummistücke, wird durch Bolzen, die das dritte Gummistück durchdringen und die Gehäusehälften zusammenhalten, zusammengepresst. Dadurch wird das gesamte, aus den einzelnen Gummistücken bestehende Elastomerelement unter Vorspannung gesetzt. Die unterschiedlichen Gummistücke können einen einheitlichen Körper bilden.

Aus der US-A-2 074 939 ist eine elastische Kupplung mit zwei mit Kupplungsgliedern versehenen Kupplungshälften bekannt.

Zwischen den Kupplungsgliedern befindet sich ein sternförmiges Elastomerelement. Dieses Elastomerelement weist vier Arme aus einem zusammendrückbaren Material in mehreren Lagen auf, die in einer zentralen Nabe aus einem elastisch nachgiebigen Material gehalten sind.

Der Erfindung liegt die Aufgabe zugrunde, das Elastomerelement der gattungsgemäßen elastischen Kupplung ohne Durchschlagssicherung derart zu gestalten, dass sowohl die Forderung nach Übertragung eines hohen Drehmomentes als auch die Forderung nach einer geringen Rückstellkraft und des Ausgleiches eines Wellenversatzes erfüllt werden kann.

Die Aufgabe wird bei einer gattungsgemäßen elastischen Kupplung ohne Durchschlagsicherung erfindungsgemäß durch die kennzeichnenden Merkmale des Anspruches 1 gelöst. Vorteilhafte Ausgestaltungen der Erfindung sind Gegenstand der Unteransprtiche.

Das Elastormerelement der erfindungsgemäßen elastischen Kupplung ohne Durchschlagssicherung erfüllt die gestellten, einander entgegengesetzt gerichteten Forderungen dadurch, dass jeder der beiden Bereiche, aus denen das Elastomerelement aufgebaut ist, auf jeweils eine der Forderungen ausgelegt ist. Dabei wird der erste, primär durch die Umfangskraft auf Biegung beanspruchte Bereich des Elastomerelements vergleichsweise hart und der zweite, primär auf Druck beanspruchte Bereich, der einen relativ großen Verformungsanteil aufzunehmen hat, vergleichsweise weich ausgeführt. Die äußeren Abmessungen der bisher verwendeten Elastomerelemente können unverändert bleiben, so dass das erfindungsgemäße Elastomerelement ohne Änderung der Anschlussbauteile der elastischen Kupplung einzusetzen ist.

Ein Ausführungsbeispiel der Erfindung ist in der Zeichnung dargestellt und wird im Folgenden näher erläutert. Es zeigen:
- Fig. 1: den Längsschnitt durch eine elastische Kupplung und
- Fig. 2: als Längsschnitt im vergrößerten Maßstab ein Elastormerelement der elastischen Kupplung nach Fig. 1.

Die dargestellte steckbare, elastische Kupplung ohne Durchschlagssicherung besteht aus einer ersten Kupplungshälfte 1 und aus einer zweiten Kupplungshälfte 2, die auf die Wellen der zu verbindenden Maschinen gesetzt sind. In der ersten Kupplungshälfte 1 sind auf einem Kreisbogen mit Abstand voneinander mehrere Taschen 3 angebracht. In jede Tasche 3 ist ein Elastomerelement 4 eingesetzt, wobei die radial nach innen und die radial nach außen gerichteten Enden 8 des Elastomerelementes 4 in die erste Kupplungshälfte 1 einspannt sind. Die zweite Kupplungshälfte 2 ist mit Nocken 5 versehen, die jeweils in die erste Kupplungshälfte in die Freiräume zwischen den Elastomerelementen 4 eingreifen. Durch die Nocken 5 wird die Drehmomentübertragung in Form einer an den radial innen und den radial außen liegenden Enden 8 der Elastomerelemente 4 wirkenden Umfangskraft erreicht. Falls das Elastomerelement 4 zerstört wird, können die beiden Kupplungshälften 1, 2 ohne direkten Kontakt frei drehen.

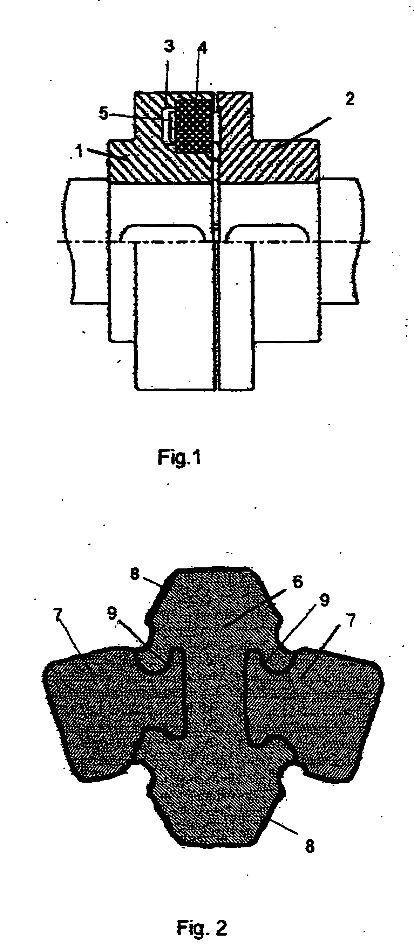

Das in Fig. 2 vergrößert dargestellte Elastomerelement 4 weist einen ersten Bereich 6 und einen zweiten Bereich 7 auf. Der erste Bereich 6 erstreckt sich im wesentlichen in radialer Richtung der Kupplung und weist konisch zulaufende Enden 8 auf, mit denen das Elastomerelement 4 in der ersten Kupplungshälfte 1 eingespannt ist. Der zweite Bereich 7 hat die Form von zwei Vorsprüngen, die bei eingerückter Kupplung in der Höhe der Nocken 5 seitlich an den ersten Bereich 6 des Elastomerelementes 4 angeformt sind. Auf der innen liegenden Seite sind die Vorsprünge mit einem hinterschnittenen Profil 9 versehen, mit dem sie nach einer Art einer Verzahnung in den ersten Bereich 6 eingreifen. Die beiden Bereiche 6, 7 des Elastomerelementes 4 werden durch Vulkanisieren miteinander fest verbunden. Neben einer stoffschlüssigen Verbindung durch das Vulkanisieren besteht eine formschlüssige Verbindung durch die Verzahnung über das hinterschnittene Profil 9.

Die beiden Bereiche 6, 7 des Elastomerelementes 4 sind auf unterschiedliche Eigenschaften ausgelegt. Der erste Bereich 6 ist im Vergleich mit dem zweiten Bereich 7 formstabil und hart ausgeführt und wird in einer kombinierten Beanspruchung auf Druck und Biegung belastet. Der zweite aus den beiden Vorsprüngen bestehende Bereich 7 ist im Vergleich mit dem ersten Bereich 6 weich und nachgiebig ausgeführt. Dieser zweite Bereich 7 wird primär auf Druck beansprucht und kann aufgrund der spezifischen Ausgestaltung der von außen vorgegebenen Verformung ohne relativ große Rückstellkräfte nachgeben. Weiterhin ist vorteilhaft, dass eine Relativbewegung zwischen den Nocken 5 und den Vorsprüngen des zweiten Bereiches 7 des Elastomerelementes 4 bei relativ weicher Oberfläche aufgrund des erhöhten Reibwertes im Vergleich zu einem harten Gummielement vermieden wird. Dadurch wird ein abrasiver Verschleiß an dem Elastomerelement 4 unterbunden.

## Patentansprüche

1. Elastische Kupplung mit zwei Kupplungshälften (1, 2), deren erste Kupplungshälfte (1) mit Taschen (3) versehen ist, die auf einem Kreisbogen mit Abstand voneinander angeordnet sind, und deren zweite Kupplungshälfte (2) Nocken (5) aufweist, die in die erste Kupplungshälfte (1) jeweils zwischen zwei benachbarte sich radial erstreckende Elastomerelemente (4) eingreifen, die jeweils aus zwei Bereichen (6, 7) mit unterschiedlichen Eigenschaften bestehen, wobei der erste Bereich (6) formstabiler als der zweite Bereich (7) und der zweite Bereich (7) nachgiebiger als der erste Bereich (6) ausgebildet sind, **dadurch gekennzeichnet, dass** die beiden Bereiche (6, 7) des Elastomerelements form- und/oder stoffschlüssig miteinander verbunden sind, dass der erste, formstabilere und der Übertragung einer Umfangskraft dienende Bereich (6) Enden (8) aufweist, mit denen das Elastomerelement (4) in den Taschen (3) der ersten Kupplungshälfte (1) eingespannt ist, und dass der zweite, nachgiebigere Bereich (7) aus zwei Vorsprüngen besteht, die in Höhe der Nocken (5) seitlich an den ersten, formstabileren Bereich (6) angeformt sind, die auf der innen liegenden Seite mit einem hinterschnittenen Profil (9) versehen sind, mit dem sie in den ersten Bereich (6) eingreifen, und jeweils einem der Nocken (5) der zweiten Kupplungshälfte (2) gegenüberstehen.

2. Kupplung nach Anspruch 1, **dadurch gekennzeichnet, dass** die beiden Bereiche (6, 7) des Elastomerelementes (4) durch Vulkanisieren stoffschlüssig miteinander verbunden sind.

3. Kupplung nach Anspruch 2, **dadurch gekennzeichnet, dass** die Vorsprünge des zweiten nachgiebigeren Bereiches (7) jeweils an der innenliegenden Seite ein hinterschnittenes Profil (9) aufweisen, mit dem diese in den ersten Bereich (6) zusätzlich zu der stoffschlüssigen Verbindung formschlüssig nach Art einer Verzahnung eingreifen.

## Claims

1. Resilient coupling with two coupling halves (1, 2), the first coupling half (1) of which is provided with pockets arranged at a mutual spacing on an arc and the second coupling half (2) of which has dogs (5) each engaging in the first coupling half (1) between two adjacent radially extending elastomeric elements (4), which each consist of two regions (6, 7) with different characteristics, wherein the first region (6) is formed to be more stable in shape than the second region (7) and the second region (7) is formed to be more flexible than the first region (6), **characterised in that** the two regions (6, 7) of the elastomeric element are connected together in shape-locking and/or material-locking manner, that the first region (6) of more stable shape and serving for transmission of a circumferential force has ends (8) by which the elastomeric element (4) is clamped in place in the pockets (3) of the first coupling half (1) and that the second, more flexible region (7) consists of two projections, which are integrally formed laterally at the first region (6) of more stable shape at the level of the dogs (4) and which are provided on the inwardly disposed side with an undercut profile (9), by which they engage in the first region (6), and are each opposite a respective one of the dogs (5) of the second coupling half (2).

2. Coupling according to claim 1, **characterised in that** the two regions (6, 7) of the elastomeric element (4) are connected together in material-locking manner by vulcanisation.

3. Coupling according to claim 2, **characterised in that** the projections of the second, more flexible region (7) each have at the inwardly disposed side an undercut profile (9) by which the projections engage in the first region (6) in shape-locking manner in the manner of a toothing additionally to the material-locking connection.

## Revendications

1. Accouplement élastique comportant deux moitiés d'accouplement (1, 2), dont la première moitié d'accouplement (1) est pourvue de poches (3) qui sont disposées à distance les unes des autres sur un arc de cercle, et dont la deuxième moitié d'accouplement (2) présente des saillants (5) qui viennent en prise dans la première moitié d'accouplement (1) à chaque fois entre deux éléments en élastomère (4) voisins, s'étendant radialement, qui sont chacun composés de deux zones (6, 7) présentant des caractéristiques différentes, la première zone (6) étant de forme plus stable que la deuxième zone (7) et la deuxième zone (7) étant plus flexible que la première zone (6), **caractérisé en ce que** les deux zones (6, 7) de l'élément en élastomère sont reliées l'une à l'autre par coopération de forme et/ou de matière, que la première zone (6), de forme plus stable et servant à transmettre une force périphérique, présente des extrémités (8) par lesquelles l'élément en élastomère (4) est enserré dans les poches (3) de la première moitié d'accouplement (1), et que la deuxième zone (7) plus flexible est composée de deux saillies qui sont formées à la hauteur des saillants (5) latéralement sur la première zone (6) de forme plus stable, qui sont pourvus sur le côté situé à l'intérieur d'un profil (9) à prise par contournement, par lequel ils viennent en prise dans la première zone (6), et font respectivement face à l'un des saillants (5) de la deuxième moitié d'accouplement (2).

2. Accouplement élastique selon la revendication 1, **caractérisé en ce que** les deux zones (6, 7) de l'élément en élastomère (4) sont reliées l'une à l'autre par coopération de matière par vulcanisation.

3. Accouplement élastique selon la revendication 2, **caractérisé en ce que** les saillies de la deuxième zone (7) plus flexible présentent respectivement sur le côté situé à l'intérieur un profil (9) à prise par contournement, par lequel ceux-ci, en plus de la liaison par coopération de matière, viennent en prise dans la première zone (6) par coopération de forme, à la manière d'une denture.
